# EUROPEAN PATENT SPECIFICATION

(11) **EP 1 126 162 B1**
(45) Date of publication and mention of the grant of the patent: **28.12.2005**
(21) Application number: 01103448.5
(22) Date of filing: 14.02.2001
(51) Int. Cl.: F02M 63/02, F02M 59/46

(54) **Improved solenoid valve for regulating the fuel supply pressure of an internal combustion engine**
Elektromagnetisches Ventil zur Regelung des Brennstoffdruckes einer Brennkraftmaschine
Soupape électromagnétique pour la régulation de la pression de combustible d'un moteur à combustion interne

(30) Priority: 15.02.2000 IT TO000143
(43) Date of publication of application: 22.08.2001
(73) Proprietor: ROBERT BOSCH GMBH, 70442 Stuttgart (DE)
(72) Inventor: Banzhaf, Werner, 71069 Sindelfingen (DE)

(56) References cited:
- EP-A- 0 882 885
- EP-A- 1 087 131
- US-A- 5 626 121
- US-A- 5 913 332

## Description

The present invention relates to an improved solenoid valve for regulating the fuel supply pressure of an internal combustion engine.

In modern engine fuel supply systems, a high-pressure pump feeds the fuel to a distributor or so-called "common rail", which supplies the various engine cylinder injectors; and a solenoid valve controlled by a pressure sensor is normally provided to control and keep the fuel pressure in the distributor constant and to drain into the tank any surplus fuel supplied by the high-pressure pump. The solenoid valve comprises a supply conduit communicating with the delivery conduit of the high-pressure pump; and a shutter controlled by an electromagnet and cooperating with a seat in the supply conduit.

In one known pressure regulating solenoid valve incorporated in a radial-piston pump, the shutter is defined by a ball controlled by the end of a stem on the electromagnet armature and cooperating with a conical sealing seat at one end of the supply conduit.

On account of dirt, e.g. metal particles, settling between the ball and the conical sealing seat, the above solenoid valve is subject to sealing problems resulting in a fall in pressure and, hence, malfunctioning of the supply system as a whole. And, due to the extremely high operating pressure involved, e.g. in the region of 1400 bar, ordinary filtration means in the supply conduit likewise result in a fall in pressure along the supply conduit.

In order to overcome the above identified drawbacks, EP 1 087 131 discloses a solenoid valve provided with a supply conduit and filtering means arranged inside the supply conduit. The filtering means comprise a metal plate, which is provided with holes and is inserted transversely to the axis of the supply conduit. Owing to the relatively small width of the supply conduit the number of holes in the metal plate is rather low, and pressure fall and cavitation phenomena are likely to arise.

It is an object of the invention to provide a pressure regulating solenoid valve, which is extremely straightforward and reliable, and provides for eliminating the aforementioned drawbacks typically associated with known solenoid valves.

According to the present invention, there is provided a solenoid valve for regulating fuel supply pressure according to claim 1.

A number of preferred, non-limiting embodiments of the invention will be described by way of example with reference to the accompanying drawings, in which:
Figure 1 shows a section of a first embodiment of a fuel pressure regulating solenoid valve in accordance with the invention;
Figure 2 shows a section of a further embodiment of a regulating solenoid valve in accordance with the invention;
Figure 3 shows a section of a further embodiment of a solenoid valve in accordance with the invention;
Figure 4 shows a larger-scale section along line IV-IV in Figure 3;
Figure 5 shows a section along line V-V in Figure 4.

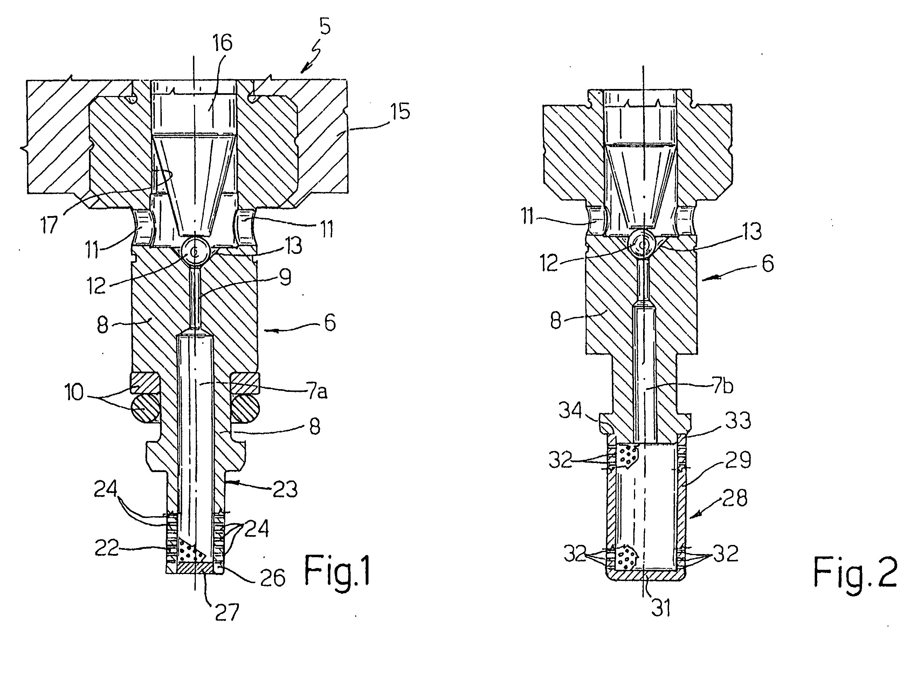

Number 5 in Figure 1 indicates as a whole a solenoid valve for regulating the fuel supply pressure of an internal combustion engine. Solenoid valve 5 comprises a valve body 6 having a supply conduit 7a extending axially along a first cylindrical portion 8 of valve body 6; supply conduit 7a comprises a calibrated-diameter portion 9, and communicates with the delivery side of a high-pressure fuel supply pump not shown; and cylindrical portion 8 is fitted in fluidtight manner to the body of the pump by means of appropriate seals 10.

Cylindrical portion 8 has a series of radial holes 11 communicating with a drain conduit (not shown) in the pump body. Between supply conduit 7a and radial holes 11, there is provided a shutter in the form of a ball 12, which engages a conical seat 13, formed at the end of portion 9, to close conduit 7a; solenoid valve 5 comprises an electromagnet having a body 15 to which valve body 6 is fitted in known manner; and the electromagnet controls an armature having a stem 16 sliding inside a hole 17 in body 15 and for controlling ball 12.

The fuel in supply conduit 7a must be kept at an operating pressure of at least 1000 bar. Preferably, the selected operating pressure is about 1400 bar; and the inside diameter of conduit 7a may advantageously be about 2.5 mm.

According to the invention, supply conduit 7a is provided with fuel filtration means, i.e. a filter comprising a cylindrical wall 22 having one end 23 integral with conduit 7a. Wall 22 comprises a number of openings in the form of circular holes 24, only some of which are shown in Figure 1 for the sake of clarity, and which are formed using a laser drilling device. After drilling, the other end 26 of wall 22 is closed by a plug or plate 27 inserted into end 26 in known manner.

Wall 22 is less than 1 mm, e.g. 0.5 to 0.8 mm, thick; holes 24 are less than 0.25 mm, e.g. 0.05 to 0.08 mm, in diameter; and the surface of wall 22 is such as to house at least 500 holes 24. Advantageously, the selected hole diameter is about 0.06 mm, and the selected number of holes 24 is about 2000.

So drilled, wall 22 prevents particles of dirt, normally minute metal particles, from infiltrating between conical seat 13 and ball 12, thus preventing sealing problems on solenoid valve 5 which may cause the fuel pressure in conduit 7a to fall so low as to impair operation of the fuel supply system as a whole.

Holes 24, on the other hand, are such as not to cause an excessive fall in fuel pressure along conduit 7a, and to avoid hydraulic cavitation erosion phenomena. An excessive fall in pressure, in fact, is prevented by drilled wall 22 having just the right ratio between the length of holes 24 and the total passage section.

In the Figure 2 embodiment, the filtration means comprise a cup-shaped body 28 made, for example, of metal; body 28 is separated from the supply conduit 7b and has a cylindrical wall 29 integral with a bottom wall 31; with the exception of an end portion 33, wall 29 is drilled with holes 32 substantially similar to holes 24 in the Figure 1 wall 22; after drilling, body 28 is inserted with end 33 resting on a seat defined by an outer shoulder 34 of conduit 7b; and drilled wall 29 has the same filtering effect as wall 22 in Figure 1.

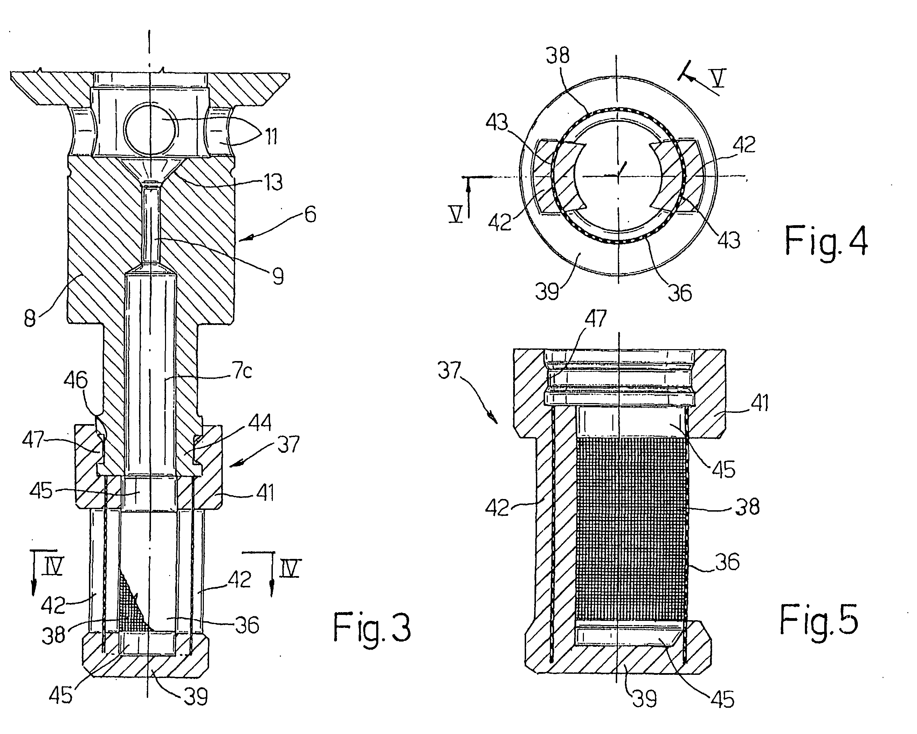

In the Figure 3-5 embodiment, the filtration means comprise a cylindrical wall made of netting 36 of wire or other material; and netting 36 is fixed to the conduit 7c by a frame 37 for supporting netting 36, and which is made of plastic material molded on to netting 36 as explained clearly below.

Netting 36 is of maximum 1 mm thickness and has meshes 38 of 0.05 to 0.08 mm in width so as to contain about 2000 meshes 38. The thickness of netting 36 is therefore also such as to achieve the right ratio between the length of meshes 38 and the total passage section and so prevent an excessive fall in pressure.

Frame 37 comprises a bottom wall 39 (Figures 3 and 4); a ring 41 which fits on to conduit 7c of valve body 6; and at least two cylindrical sectors 42 integral with bottom wall 39 and ring 41. More specifically, two diametrically opposite cylindrical sectors 42 are provided. Netting 36 is fixed to two rings 45 made of sheet metal and which are embedded in ring 41 and wall 39 of frame 37, and two cylindrical sectors 43 of netting 36 are embedded in sectors 42 of frame 37.

To fit frame 37 on to conduit 7c, one end 44 (Figure 3) of conduit 7c has a groove 46, and ring 41 has a projection 47 which clicks into groove 46. Netting 36 has the same filtering effect as drilled cylindrical walls 22 and 29.

The advantages, as compared with known solenoid valves, of solenoid valve 5 according to the invention will be clear from the foregoing description. On the one hand, filtering walls 22, 29 and 36 prevent sealing problems arising between ball 12 and conical seat 13 without producing an excessive fall in pressure, and, on the other, prevent cavitation erosion phenomena inside conical seat 13.

Clearly, further changes and improvements can be made to the solenoid valve as described herein without, however, departing from the scope of the accompanying Claims.

## Claims

1. A solenoid valve for regulating the fuel supply pressure of an internal combustion engine, and which comprises a fuel supply conduit (7a, 7b, 7c), and a shutter (12) controlled by an electromagnet and cooperating with a seat (13) in said conduit (7a, 7b, 7c), and fuel filtration means (22, 24; 29, 31; 36, 38) located in said conduit (7a, 7b, 7c) and comprising a cylindrical wall (22, 29, 36) having a number of openings (24, 32, 38) for preventing particles of dirt from infiltrating between said seat (13) and said shutter (12), without producing an excessive fall in fuel pressure; the thickness of said wall (22, 29, 36) being less than 1 mm; and the width of said openings (24, 32, 38) being less than 0.25 mm.

2. A solenoid valve as claimed in Claim 1, **characterized in that** said openings (24, 32, 38) are 0.05 to 0.08 mm in width.

3. A solenoid valve as claimed in Claim 2, **characterized in that** said wall (22, 29, 36) is 0.5 to 0.8 mm in thickness; said openings being defined by circular holes (24, 32); said holes (24, 32) being formed using a laser drilling device; and said holes (24, 32) being over 500 in number.

4. A solenoid valve as claimed in Claim 3, **characterized in that** the diameter of said circular holes (24, 32) is about 0.06 mm; and said holes (24, 32) being about 2000 in number.

5. A solenoid valve as claimed in Claim 4, **characterized in that** said cylindrical wall (22) has one end (23) integral with one end of said conduit (7a); said conduit (7a) having another end (26) closed by a plug (27) inserted inside said other end (26).

6. A solenoid valve as claimed in Claim 4, **characterized in that** said cylindrical wall (29) is separate from said conduit (7b) and integral with a bottom wall (31) of a cup-shaped body (28); said cylindrical wall (29) comprising a portion (33) which fits on to a shoulder (34) of said conduit (7b).

7. A solenoid valve as claimed in Claim 1 or 2, **characterized in that** said cylindrical wall is made of netting (36) having meshes (38) of 0.05 to 0.08 mm square; said netting (36) being supported by a frame (37) which fits on to said conduit (7c).

8. A solenoid valve as claimed in Claim 7, **characterized in that** said frame (37) comprises a bottom wall (39), a ring (41) which fits on to said conduit (7c), and at least two cylindrical sectors (42) integral with said bottom wall (39) and with said ring (41); said cylindrical sectors (42) supporting said netting (36).

9. A solenoid valve as claimed in Claim 8, **characterized in that** said netting (36) is made of metal and has two supporting rings (45); said frame (37) being made of plastic material and being molded on to said netting (36) so that said supporting rings (45) are embedded in the ring (41) and in the bottom wall (39) of said frame (37), and so that two sectors (43) of said netting (36) are embedded in the cylindrical sectors (42) of said frame (37).

10. A solenoid valve as claimed in Claim 9, **characterized in that** the ring (41) of said frame (37) comprises an annular projection (47) which clicks into a groove (46) on said conduit (7c).

11. A solenoid valve as claimed in one of the foregoing Claims, **characterized in that** said seat (13) is conical and located at one end of said conduit (7a, 7b, 7c); said shutter comprising a ball (12) cooperating with said conical seat (13); and said wall (22, 29, 36) having such a ratio between the length of said openings (24, 32, 38) and the total passage section as to prevent an excessive fall in pressure.

## Patentansprüche

1. Magnetventil zur Regelung des Kraftstoff-Förderdrucks einer Brennkraftmaschine, das eine Kraftstoffzufuhrleitung (7a, 7b, 7c) und einen durch einen Elektromagneten gesteuerten Verschluss (12), der mit einem Sitz (13) in der Leitung (7a, 7b, 7c) zusammenwirkt, und Kraftstofffiltermittel (22; 24; 29, 31; 36, 38) aufweist, die in der Leitung (7a, 7b, 7c) angeordnet sind und eine zylindrische Wand (22, 29, 36) mit mehreren Öffnungen (24, 32, 38), die ohne Erzeugung eines übermäßigen Abfalls des Kraftstoffdrucks verhindern sollen, dass Schmutzteilchen zwischen dem Sitz (13) und dem Verschluss (12) eindringen, umfassen, wobei die Dicke der Wand (22, 29, 36) weniger als 1 mm und die Breite der Öffnungen (24, 32, 38) weniger als 0,25 mm beträgt.

2. Magnetventil nach Anspruch 1, **dadurch gekennzeichnet, dass** die Öffnungen (24, 32, 38) eine Breite von 0,05 bis 0,08 mm aufweisen.

3. Magnetventil nach Anspruch 2, **dadurch gekennzeichnet, dass** die Wand (22, 29, 36) eine Dicke von 0,5 bis 0,8 mm aufweist, wobei die Öffnungen durch kreisförmige Löcher (24, 32) definiert werden und die Löcher (24, 32) unter Verwendung einer Laserbohrvorrichtung ausgebildet sind, wobei von den Löchern (24, 32) mehr als 500 vorhanden sind.

4. Magnetventil nach Anspruch 3, **dadurch gekennzeichnet, dass** der Durchmesser der kreisförmigen Löcher (24, 32) ca. 0,06 mm beträgt und von den Löchern (24, 32) ca. 2000 vorhanden sind.

5. Magnetventil nach Anspruch 4, **dadurch gekennzeichnet, dass** die zylindrische Wand (22) ein Ende (23) aufweist, das integral mit einem Ende der Leitung (7a) ausgebildet ist, wobei die Leitung (7a) ein anderes Ende (26) aufweist, das durch einen in dem anderen Ende (26) eingesetzten Stopfen (27) geschlossen ist.

6. Magnetventil nach Anspruch 4, **dadurch gekennzeichnet, dass** die zylindrische Wand (29) von der Leitung (7b) getrennt und integral mit einer Bodenwand (31) eines schalenförmigen Körpers (28) ausgebildet ist, wobei die zylindrische Wand (29) einen Teil (33) aufweist, der auf eine Schulter (34) der Leitung (7b) passt.

7. Magnetventil nach Anspruch 1 oder 2, **dadurch gekennzeichnet, dass** die zylindrische Wand aus einem Netz (36) mit Maschen (38) von 0,05 bis 0,08 mm im Quadrat hergestellt ist, wobei das Netz (36) durch einen Rahmen (37) gestützt wird, der auf die Leitung (7c) passt.

8. Magnetventil nach Anspruch 7, **dadurch gekennzeichnet, dass** der Rahmen (37) eine Bodenwand (39), einen auf die Leitung (7c) passenden Ring (41) und mindestens zwei zylindrische Sektoren (42) umfasst, die integral mit der Bodenwand (39) und dem Ring (41) ausgebildet sind, wobei die zylindrischen Sektoren (42) das Netz (36) stützen.

9. Magnetventil nach Anspruch 8, **dadurch gekennzeichnet, dass** das Netz (36) aus Metall besteht und zwei Stützringe (45) aufweist, wobei der Rahmen (37) aus Kunststoff besteht und an dem Netz (36) angeformt ist, so dass die Stützringe (45) in dem Ring (41) und in der Bodenwand (39) des Rahmens (37) eingebettet sind und die beiden Sektoren (43) des Netzes (36) in den zylindrischen Sektoren (42) des Rahmens (37) eingebettet sind.

10. Magnetventil nach Anspruch 9, **dadurch gekennzeichnet, dass** der Ring (41) des Rahmens (37) einen ringförmigen Vorsprung (47) umfasst, der in eine Nut (46) an der Leitung (7c) einrastet.

11. Magnetventil nach einem der vorhergehenden Ansprüche, **dadurch gekennzeichnet, dass** der Sitz (13) konisch ist und sich an einem Ende der Leitung (7a, 7b, 7c) befindet, wobei der Verschluss eine Kugel (12) umfasst, die mit dem konischen Sitz (13) zusammenwirkt, und die Wand (22, 29, 36) solch ein Verhältnis zwischen der Länge der Öffnungen (24, 32, 38) und dem Gesamtdurchtrittsquerschnitt aufweist, dass ein übermäßiger Druckabfall verhindert wird.

## Revendications

1. Soupape électromagnétique pour la régulation de la pression d'alimentation en carburant d'un moteur à combustion interne, comprenant:
- un conduit d'alimentation en carburant (7a, 7b, 7c),
- un obturateur (12) commandé par un électroaimant et coopérant avec un siège (13) situé dans le conduit (7a, 7b, 7c), et
- des moyens de filtration (22, 24 ; 29, 31 ; 36, 38) placés dans le conduit (7a, 7b, 7c) et comprenant une paroi cylindrique (22, 29, 36) munie d'un certain nombre d'ouvertures (24, 32, 38) pour empêcher des particules de saleté de s'infiltrer entre le siège (13) et l'obturateur (12), sans produire une chute excessive de la pression de carburant, l'épaisseur de la paroi (22, 29, 36) étant inférieure à 1 mm, et la largeur des ouvertures (24, 32, 38) étant inférieure à 0,25 mm.

2. Soupape électromagnétique selon la revendication 1,
**caractérisée en ce que**
les ouvertures (24, 32, 38) ont une largeur de 0,05 à 0,08 mm.

3. Soupape électromagnétique selon la revendication 2,
**caractérisée en ce que**
la paroi (22, 29, 36) présente une épaisseur de 0,5 à 0,8 mm,
les ouvertures sont défmies par des trous circulaires (24, 32),
les trous (24, 32) sont formés en utilisant un dispositif de perçage à laser, et
les trous (24, 32) sont au nombre de plus de 500.

4. Soupape électromagnétique selon la revendication 3,
**caractérisée en ce que**
le diamètre des trous circulaires (24, 32) est d'environ 0,06 mm, et ces trous (24, 32) sont au nombre de plus de 2000.

5. Soupape électromagnétique selon la revendication 4,
**caractérisée en ce que**
la paroi cylindrique (22) comporte une extrémité (23) d'un seul tenant avec une extrémité du conduit (7a), ce conduit (7a) ayant une autre extrémité (26) fermée par un bouchon (27) introduit à l'intérieur de l'autre extrémité (26).

6. Soupape électromagnétique selon la revendication 4,
**caractérisée en ce que**
la paroi cylindrique (29) est séparée du conduit (7b) et fait partie intégrante de la paroi de fond (31) d'un corps en forme de coupelle (28), la paroi cylindrique (29) comprenant une partie (33) qui s'adapte sur un épaulement (34) du conduit (7b).

7. Soupape électromagnétique selon la revendication 1 ou 2,
**caractérisée en ce que**
la paroi cylindrique est constituée d'un filet (36) à mailles (38) de 0,05 à 0,08 mm^{2,} ce filet (36) étant supporté par un châssis (37) qui s'adapte sur le conduit (7c).

8. Soupape électromagnétique selon la revendication 7,
**caractérisée en ce que**
le châssis (37) comprend une paroi de fond (39), une bague (41) qui s'adapte sur le conduit (7c), et au moins deux secteurs cylindriques (42)
faisant partie intégrante de la paroi de fond (39) et de la bague (41), ces secteurs cylindriques (42) supportant le filet (36).

9. Soupape électromagnétique selon la revendication 8,
**caractérisée en ce que**
le filet (36) est réalisé en métal et comporte deux anneaux de support (45), le châssis (37) étant réalisé en matière plastique et moulé sur le filet (36) de façon que les anneaux de support (45) soient noyés dans la bague (41) et dans la paroi de fond (39) du châssis (37), et de façon que deux secteurs (43) du filet (36) soient noyés dans les secteurs cylindriques (42) du châssis (37).

10. Soupape électromagnétique selon la revendication 9,
**caractérisée en ce que**
la bague (41) du châssis (37) comprend une saillie annulaire (47) qui s'enclenche dans une rainure (46) du conduit (7c).

11. Soupape électromagnétique selon l'une quelconque des revendications précédentes,
**caractérisée en ce que**
le siège (13) est conique et placé à une extrémité du conduit (7a, 7b, 7c), l'obturateur est constitué par une bille (12) coopérant avec le siège conique (13), et
la paroi (22, 29, 36) présente, entre la longueur des ouvertures (24, 32, 38) et la section de passage totale, un rapport tel qu'on évite une chute de pression excessive.
